# EUROPEAN PATENT SPECIFICATION

(11) **EP 3 871 441 B1**
(45) Date of publication and mention of the grant of the patent: **30.07.2025**
(21) Application number: 18808275.4
(22) Date of filing: 20.11.2018
(51) Int. Cl.: H04L 43/0852, H04W 28/02, H04L 47/283, H04L 47/19, H04L 43/087, H04L 41/5009

(54) **DEVICES AND METHODS FOR TIME SENSITIVE COMMUNICATION IN A COMMUNICATION NETWORK**
VORRICHTUNGEN UND VERFAHREN ZUR ZEITSENSITIVEN KOMMUNIKATION IN EINEM KOMMUNIKATIONSNETZWERK
DISPOSITIFS ET PROCÉDÉS POUR UNE COMMUNICATION SENSIBLE AU TEMPS DANS UN RÉSEAU DE COMMUNICATION

(43) Date of publication of application: 01.09.2021
(73) Proprietor: Huawei Technologies Co., Ltd., Longgang District Shenzhen, Guangdong 518129 (CN)
(72) Inventor: BULAKCI, Ömer, 80992 Munich (DE); WEI, Qing, 80992 Munich (DE); PENG, Chenghui, 80992 Munich (DE); NI, Hui, 80992 Munich (DE); AYAZ, Serkan, 80992 Munich (DE)
(74) Representative: Goddar, Heinz J.
(86) International application number: PCT/EP2018/081944
(87) International publication number: WO 2020/104021

(56) References cited:
- EMMANOUIL LAKIOTAKIS ET AL: "Application-Network Collaboration Using SDN for Ultra-Low Delay Teleorchestras", ARXIV.ORG, CORNELL UNIVERSITY LIBRARY, 201 OLIN LIBRARY CORNELL UNIVERSITY ITHACA, NY 14853, 28 August 2018 (2018-08-28), XP081267006, DOI: 10.1109/ISCC.2017.8024507
- SCHATZ RAIMUND ET AL: "QoE Management for Future Networks", 25 May 2018, INTERNATIONAL CONFERENCE ON COMPUTER ANALYSIS OF IMAGES AND PATTERNS. CAIP 2017: COMPUTER ANALYSIS OF IMAGES AND PATTERNS; [LECTURE NOTES IN COMPUTER SCIENCE; LECT.NOTES COMPUTER], SPRINGER, BERLIN, HEIDELBERG, PAGE(S) 49 - 80, ISBN: 978-3-642-17318-9, XP047473933

## Description

### TECHNICAL FIELD

In general, the present invention relates to communication networks. More specifically, the present invention relates to devices and methods for implementing an application-based quality of service notification scheme, in particular for URLLC services in a 5G communication network.

### BACKGROUND

The 5G system architecture specified in 3GPP TS 23.501 v15.1.0 does not consider URLLC (ultra-reliable low-latency communication) capabilities. Some background information about URLLC use cases and scenarios is provided in 3GPP TR 22.804 "Study on Communication for Automation in Vertical Domains" and 3GPP TS 22.261 "Service requirements for the 5G system". Current industrial automation technologies are considering different wired/wireless communication technologies such as field bus systems, industrial Ethernet systems or wireless communication systems to connect distributed automation functions. 3GPP TR 22.804 summarizes a variety of technologies currently used in the industry and explains the special challenges/requirements for 5G systems supporting URLLC services.

Thus, there is a need for improved devices and methods for implementing an application-based quality of service notification scheme, in particular for URLLC services in a 5G communication network.

In "Application-network collaboration using SDN for ultra-low delay teleorchestras" by E. Lakiotakis et al., arxiv.org, Cornell University library, 28 August 2018, XP081267006, networked music performance applications are addressed as ultra-low delay sensitive applications, allowing geographically separate musicians to perform seamlessly as a tele-orchestra. For this application type, the quality-of-service indicator is the mouth-to-ear delay, which should be kept below 25ms, including signal processing latency and network delay.

A networked music performance system comprises three key roles: transmitters, receivers, and an SDN controller. Transmitters are entities that generate audio, i.e., the devices of musicians participating in the teleorchestra. Receivers are entities that receive audio, i.e., the devices of the audience and of musicians that should receive audio flows from other musicians in order to be synchronized. Each transmitter comprises a network module, which transmits audio signals through the network and monitors network delays. The transmitters determine network delays by sending periodically UDP packets with specific header fields over each path towards the receiver. The receiver acts as an echo server and sends these packets back over the paths that were initially used. The transmitter then evaluates the network delay in terms of round-trip-time, and the results are sent to the SDN controller.

### SUMMARY

It is an object of the invention to provide improved devices and methods for implementing an application-based quality of service notification scheme, in particular for URLLC services in a 5G communication network. The invention is defined by the independent claims. Advantageous embodiments of the invention are given by the dependent claims.

The foregoing and other objects are achieved by the subject matter of the independent claims. Further implementation forms are apparent from the dependent claims, the description and the figures.

More specifically, according to a first aspect the invention relates to a network application entity for providing a communication service, in particular a URLLC service in a communication network, in particular a 5G communication network. The network application entity is configured to provide communication service quality information, in particular a communication service quality measure value, to a network management and/or control entity of the communication network. The URLLC service can include, for instance, industrial communication services, time sensitive network (TSN) communication services, automotive (i.e. V2X or eV2X) communication services and the like. The communication service quality information can be provided in form of a notification message. Furthermore, the communication service quality information can be exchanged in form of a request/response messaging and/or subscribe/notify messaging (e.g., similar to the messaging techniques used in service based architecture (SBA) defined in 5G system architecture specified by 3GPP TS 23.501 v15.1.0).

In a further possible implementation form of the first aspect, the network application entity is further configured to extract timing information, in particular one or more timestamps from an application layer uplink message, received from a user equipment as part of the communication service, to determine the communication service quality information on the basis of the timing information, and to provide the communication service quality information to the network management and/or control entity. The timing information, in particular the timestamp, can indicate, for instance, the generation time of the application layer downlink message and/or an offset value showing the execution time of the application layer downlink message, i.e. the corresponding data packet at the receiving node.

The network application entity can be implemented as an application server, wherein the application server is configured to receive the application layer message from the user equipment. The application server can be located in the core network of the communication network and/or in a cloud network (e.g., 3^{rd} party network) in communication with the communication network.

Alternatively, the network application entity can be an application function implemented in the communication network, wherein the application function is configured to extract the timing information from the application layer message exchanged between the user equipment and an application server providing the communication service.

In a further possible implementation form of the first aspect, the network application entity is configured to extract further timing information from a further application layer message received from the user equipment via a further communication path of the communication network and to determine the communication service quality information on the basis of the timing information and the further timing information.

In a further possible implementation form of the first aspect, the network application entity is configured to receive the communication service quality information from a user equipment of the communication network, wherein timing information has been extracted by the user equipment from an application layer message received from the network application entity as part of the communication service and the communication service quality information has been determined by the user equipment on the basis of the timing information.

In a further possible implementation form of the first aspect, the network application entity is configured to receive timing information from a user equipment of the communication network, wherein the timing information has been extracted by the user equipment from an application layer message received from the network application entity as part of the communication service, and to determine the communication service quality information on the basis of the timing information.

In a further possible implementation form of the first aspect, the communication service quality information comprises a communication service quality measure value, wherein the network application entity is configured to provide the communication service quality information to the network management and/or control entity, in case the communication service quality measure value is larger or equal or smaller than a threshold value, wherein the threshold value can be configured in advance by the network application entity.

In a further possible implementation form of the first aspect, the network application entity is configured to periodically or aperiodically provide the communication service quality information to the network management and/or control entity.

In a further possible implementation form of the first aspect, the communication service quality information comprises an end-to-end delay and/or a jitter of the communication service and/or wherein the network application entity is configured to further provide a quality of service (QoS) class identifier, a session identifier and/or a flow identifier associated with the communications service quality information to the network management and/or control entity.

According to a second aspect the invention relates to a network management and/or control entity for QoS monitoring of a communication service in a communication network. The network management and/or control entity is configured to receive communication service quality information from a user equipment and/or a network application entity of the communication network and to adjust the communication network for improving the QoS of the communication service on the basis of the communication service quality information.

The network management and/or control entity can be a management plane entity and/or a control plane entity, e.g. implemented as a distributed entity or function having some functionality in the core network and some functionality in the management plane of the communication network. For instance, the network management and/or control entity can be implemented as an access and mobility management function (AMF), a policy and control function (PCF), a session management function (SMF) or as another type of function implemented in the core network and/or management plane of the communication network.

In a further possible implementation form of the second aspect, the network management and/or control entity is configured to adjust the communication network by one or more of the following operations: re-selecting a user plane function (UPF) and/or radio access network (RAN) (e.g., distributed unit (DU) change, cell re-selection, handover to another cell, and beam re-selection) for an on-going communication session; selecting a new user plane function (UPF) and/or RAN for a new communication session; re-orchestrating one or more network functions; and/or re-configuration of the semi-persistent scheduling (SPS) configuration in RAN. A re-selection process can also imply a configuration update or change, e.g., to meet QoS requirements.

According to a third aspect the invention relates to a user equipment configured to use a communication service provided by a network application entity in a communication network. The user equipment is configured to provide communication service quality information, in particular a communication service quality measure value, to the network application entity of the communication network and/or to a network management and/or control entity of the communication network. The user equipment can comprise a firmware, wherein the firmware is configured to provide the communication service quality information to the network application entity and/or to the network management and/or control entity. The URLLC service can include, for instance, industrial communication services, time sensitive network (TSN) communication services, automotive (i.e. V2X or eV2X) communication services and the like. The communication service quality information can be provided in form of a notification message. Furthermore, the communication service quality information can be exchanged in form of a request/response messaging and/or subscribe/notify messaging (e.g., similar to the messaging techniques used in service based architecture (SBA) defined in 5G system architecture specified by 3GPP TS 23.501 v15.1.0).

In a further possible implementation form of the third aspect, the user equipment is configured to extract timing information, in particular one or more timestamps, from an application layer message received from the network application entity of the communication network and to determine the communication service quality information on the basis of the timing information.

In a further possible implementation form of the third aspect, the user equipment is configured to extract further timing information, in particular one or more further timestamps, from a further application layer message received from the network application entity via a further communication path of the communication network and to determine the communication service quality information on the basis of the timing information and the further timing information.

In a further possible implementation form of the third aspect, the user equipment is configured to provide the communication service quality information to the network application entity for forwarding the communication service quality information to the network management and/or control entity of the communication network.

In a further possible implementation form of the third aspect, the communication service quality information comprises a communication service quality measure value, wherein the user equipment is configured to provide the communication service quality information to the network application entity and/or to the network management and/or control entity, in case the communication service quality measure value is larger, or equal or smaller than a threshold value, wherein the threshold value can be configured in advance by the network application entity.

Alternatively or additionally, the user equipment can be configured to periodically or aperiodically provide the communication service quality information to the network application entity of the communication network and/or to the network management and/or control entity of the communication network. The periodically or aperiodically reported communication service quality information can contain an average measured delay/jitter, a maximum delay/jitter and/or a delay/jitter measurement time series.

The communication service quality information can comprise an end-to-end delay and/or a jitter of the communication service and/or wherein the user equipment is configured to further provide a QoS class identifier, a session identifier and/or a flow identifier associated with the communications service quality information to the network application entity and/or to the network management and/or control entity.

Thus, embodiments of the invention are based on the idea of using timing information, in particular one or more timestamps, at the application layer in the receiving node while measuring communication service quality measure values, such as end-to-end delay and/or jitter values for each received packet. Once the measurement is performed at the receiving node, the receiving node can generate a notification message and transmit the notification message to the transmitting node. According to embodiments of the invention this notification message (received by the transmitting node) can be used by the network for one or more of the following purposes.

According to embodiments of the invention the notification message allows to better understand long term transmission characteristics/statistics of each transmission path between one or more user plane functions (UPFs) and a radio access network (RAN) of the communication network and, based on this information, to perform UPF and/or RAN re-selection for on-going protocol data units (PDU) sessions or UPF and/or RAN selection for new PDU sessions. A re-selection process can also imply a configuration update or change, e.g., to meet QoS requirements.

According to embodiments of the invention the notification message allows making predictions about the transmission quality of each transmission path between UPF and RAN. Based on such prediction, UPF and/or RAN re-selection can be performed. A re-selection process can also imply a configuration update or change, e.g., to meet QoS requirements.

According to embodiments of the invention the notification message allows understanding short term transmission characteristics/statistics of each transmission path between UPF and RAN. In this case, if consecutive packets experience delay/jitter problems, a faster reaction from the core network (CN) side or radio access network (RAN) side can be expected.

Thus, embodiments of the invention provide an advantageous application layer delay/jitter notification mechanism for URLLC services in a 5G communication network. By using this advantageous notification mechanism, 5G System, 5GS (including 5G Core (5GC), 5G-RAN) can provide better end-to-end QoS control of URLLC service flows. Furthermore, no extra timestamp overhead at the lower layers is required, because the currently available timestamp information at the application layer is used. The mechanism provided by embodiments of the invention can be either used complementary to other QoS monitoring mechanisms (e.g. to increase the monitoring accuracy, to adjust the monitoring results of other monitoring solutions considering cross layer aspects, to be used in case the other monitoring mechanism is not available) or be used independently on per application basis.

Embodiments of the invention allow to extend the signaling procedures in a 5G communication network so as to improve the network monitoring capabilities, in particular for URLLC type services. It is foreseeable that 5G communication networks will accommodate various 3rd party applications and verticals use cases. Embodiments of the invention provide the enhanced procedures for QoS related information exchange between 3rd party applications/verticals, which facilitate the QoS assurance of the application/verticals.

Details of one or more embodiments are set forth in the accompanying drawings and the description below. Other features, objects, and advantages will be apparent from the description, drawings, and claims.

### BRIEF DESCRIPTION OF THE DRAWINGS

In the following embodiments of the invention are described in more detail with reference to the attached figures and drawings, in which:
Fig. 1a is a diagram illustrating a notification message and/or a notification response flow for downlink traffic implemented by embodiments of the invention;
Fig. 1b is a diagram illustrating a notification message and/or a notification response flow for downlink traffic implemented by further embodiments of the invention;
Fig. 2 is a diagram illustrating notification message and/or a notification response signaling implemented by embodiments of the invention for the notification message flow of figure 1;
Fig. 3a is a diagram illustrating a notification message and/or a notification response flow for uplink traffic implemented by an example that is not according to the claims;
Fig. 3b is a diagram illustrating a notification message and/or a notification response flow for uplink traffic implemented by a further example that is not according to the claims;
Fig. 4 is a diagram illustrating notification message and/or a notification response signaling implemented by examples for the notification message flow of figure 3, which is not according to the claims;
Fig. 5 is a diagram illustrating a notification message flow for downlink traffic implemented by further embodiments of the invention;
Fig. 6 is a diagram illustrating a notification message flow for uplink traffic implemented by further examples that are not according to the claims;
Fig. 7 is a diagram illustrating a notification message flow for downlink traffic implemented by further embodiments of the invention;
Fig. 8 is a diagram illustrating a notification message flow for downlink traffic implemented by further embodiments of the invention;
Fig. 9 is a diagram illustrating notification message and/or a notification response signaling implemented by embodiments of the invention for the notification message flow of figure 8;
Fig. 10 is a diagram illustrating notification message and/or a notification response signaling implemented by further embodiments of the invention for the notification message flow of figure 8; and
Fig. 11 is a diagram illustrating a notification reporting type selection procedure implemented by embodiments of the invention.

In the following identical reference signs refer to identical or at least functionally equivalent features.

### DETAILED DESCRIPTION OF THE EMBODIMENTS

In the following description, reference is made to the accompanying figures, which form part of the disclosure, and which show, by way of illustration, specific aspects of embodiments of the invention or specific aspects in which embodiments of the present invention may be used. It is understood that embodiments of the invention may be used in other aspects and comprise structural or logical changes not depicted in the figures.

For instance, it is understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

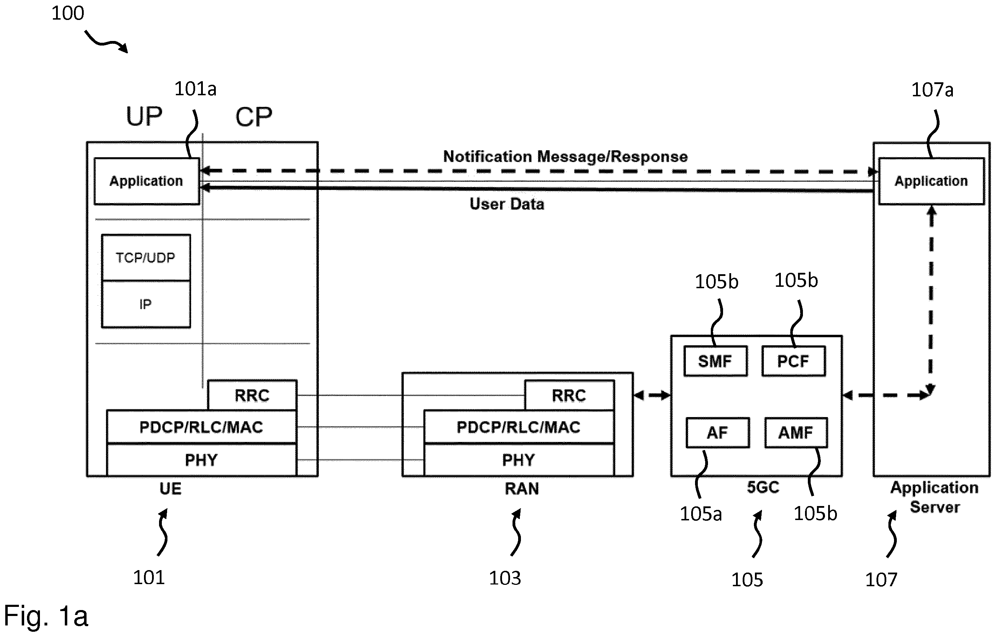

Figure 1a is a diagram illustrating a notification message flow implemented in a communication network 100, in particular 5G communication network 100. As will be described in more detail below, the communication network 100 comprises or is configured to serve one or more user equipments 101. The user equipment 101 is configured to use a communication service, in particular a URLLC service, provided by the communication network 100. In an example, the URLLC service can include, for instance, industrial communication services, time sensitive network (TSN) communication services, automotive (i.e. V2X or eV2X) communication services and the like. As illustrated in figure 1a, by using the radio resource control (RRC) layer and/or the non-access stratum (NAS) layer, the user equipment 101 is configured to communicate with the communication network 100 via a radio access network, RAN, 103 of the communication network 100.

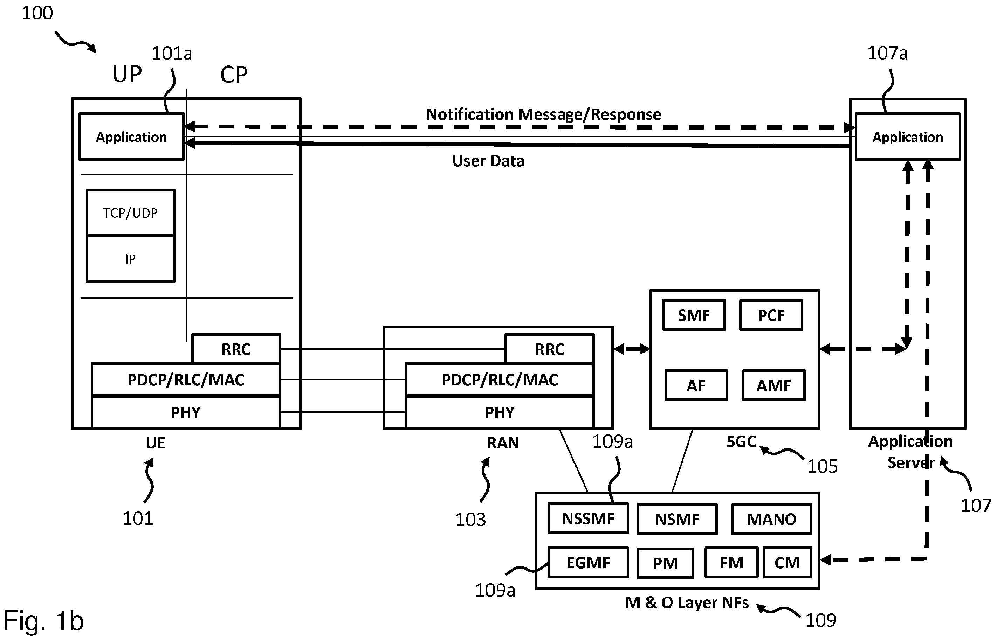

As illustrated in figure 1a, an application 101a can be executed on the user equipment 101, which implements this communication service on the user equipment 101. At the application layer the user equipment 101 (more specifically, the application 101a) is configured to communicate with a network application entity configured to provide the communication service to the user equipment 101. In the embodiment shown in figure 1, the network application entity is implemented as an application server 107, which executes an application 107a for providing the communication service to the user equipment 101. The application server 107 can be located in a core network 105 of the communication network 100 and/or in a cloud network in communication with the communication network 100. As will be described in more detail further below, in further embodiments of the invention the network application entity providing the communication service to the user equipment 101 may be implemented by an application function 105a of a core network 105 of the communication network 100.

As will be described in more detail below, the network application entity, in particular application server 107 is configured to provide communication service quality information, in particular a communication service quality measure value, to a network management and/or control entity of the communication network 100 for QoS monitoring of the communication service in the communication network 100. The network management and/or control entity is configured to receive the communication service quality information from the network application entity, in particular the application server 107 and/or from the user equipment 101 and to adjust the communication network 100 for improving the QoS of the communication service on the basis of the communication service quality information. Thus, the user equipment 101 is configured to provide the communication service quality information to the network application entity, in particular the application server 107 of the communication network 100 and/or to a network management and/or control entity of the communication network 100.

The network management and/or control entity can be a management plane entity and/or a control plane entity, e.g. implemented as a distributed entity or function having some functionality in the core network 105 and some functionality in the management plane of the communication network 100. For instance, as illustrated in figure 1a, the network management and/or control entity can be in an access and mobility management function (AMF) 105b, a policy and control function (PCF) 105b, a session management function (SMF) 105b or as another type of function implemented in the core network 105 of the communication network. Alternatively or additionally, as illustrated in figure 1b, the network management and/or control entity can be in a network function 109a in the management plane 109 of the communication network 105, such as a network slice subnet management function (NSSMF), a network slice management function (NSMF), management and orchestration (MANO), exposure governance management function (EGMF), performance management (PM); fault management (FM), configuration management (CM) and the like.

The communication service quality information can be provided in form of a notification message, as illustrated in figure 1a. In an embodiment, the communication service quality information can comprise, for instance, an end-to-end delay and/or a jitter of the communication service.

According to an option of the claimed invention, the network application entity, in particular application server 107 is further configured to extract timing information, in particular one or more timestamps, from an application layer uplink message received from the user equipment 101 as part of the communication service and to determine the communication service quality information on the basis of the timing information. The timing information, in particular the timestamp can indicate, for instance, the generation time of the application layer downlink message and/or an offset value showing the execution time of the application layer downlink message, i.e. the corresponding data packet at the receiving node.

According to the claimed invention, the user equipment 101 is configured to extract this timing information, in particular the one or more timestamps, from an application layer message received from the network application entity, in particular the application server 107 as part of the communication service and to determine the communication service quality information on the basis of the timing information. Furthermore, the user equipment 101 is configured to extract this timing information, in particular the one or more timestamps, from an application layer message received from the network application entity, in particular the application server 107, and transmit back the extracted timing information to the network application entity, in particular the application server 107, as part of the communication service, wherein the timing information can be used to determine the communication service quality information by the application server 107.

Thus, embodiments of the invention can relate to notification message (e.g., including the form of a request/response messaging and/or subscribe/notify messaging) inside core network CN 105, and/or management plane 109, and/or RAN 103 including, e.g., interactions with application layer as a first option, and/or RRC layer, and/or NAS layer as a second option. Embodiments of the invention can be based on the assumption that only application layers at the UE and at the application server are synchronized. Thus, embodiments of the invention may not require any additional synchronization between the UE 101 and RAN 103 or the UE 101 and CN 105 or RAN 103 and CN 105. According to embodiments of the invention application layer information may include timing information in the form of a timestamp showing the generation time of a corresponding packet and/or an offset value showing the execution time of the packet at the receiving node, or a timestamp showing the execution time of the packet at the receiving node. As will be appreciated, on the basis of one or more of such timestamps communication service quality measure values, such as packet jitter or end-to-end delay, can be determined. If such application layer information is used in the 5G network 100, then there may not be a need for user plane QoS monitoring mechanism at the network layer. As will be described in more detail below, embodiments of the invention can also relate to communication between the network application entity, in particular the application server 107, and the core network 105 of the communication network 100 and/or between the network application entity, in particular the application server 107, and the management plane 109 of the communication network 100. Such communication can be performed via currently being specified interfaces for the 5G system or possibly new interfaces that may be specified later.

As already described, figure 1a shows the notification message flow for the first option mentioned above, i.e., core network CN 105 and RAN 103 notification via application layer interaction, for the downlink traffic case. In this case, the UE application 101a performs end-to-end delay and jitter measurement when it receives the packet. If the packet passes the end-to-end delay and jitter evaluation (i.e., the packet is received within the required delay and jitter threshold), it can be delivered for further processing. Meanwhile, the UE application 101a generates a notification message which informs the application server (AS) 107 about the measurement results, i.e. the communication service quality information. If the measurement result exceeds a certain threshold, this may even create a violation report with a cause. This cause could be a delay or jitter violation. Once the AS 107 receives the notification message, it passes this information to the 5G core network (5GC) 105 and radio access network (RAN) 103 over the interface provided in embodiments of the invention.

The threshold values (e.g., end-to-end delay per packet, jitter per packet, average end-to-end delay, average jitter, etc.) can be delivered to the UE(s) 101 beforehand by the application server 107 for each service type. The notification message can also be sent without considering any kind of threshold value and the UE 101 reports depending on the configuration by the application server 107. For example, the application server 107 may ask the UE 101 to start reporting at a certain time and for certain duration.

Figure 1b shows a further embodiment, where the application server 107 receives the notification message including the communication service quality information from the user equipment 101 and forwards this information to the network management and/or control entity implemented in form of a network function 109a in the management plane 109 of the communication network 105.

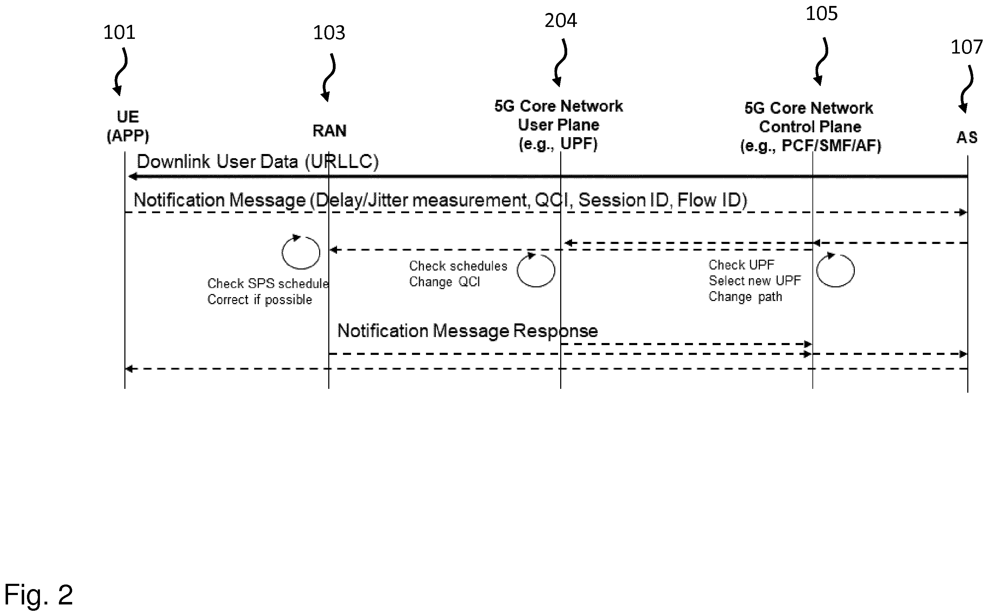

Figure 2 shows possible notification signaling for the embodiment shown in figure 1a for the downlink traffic case (a similar notification signaling can be implemented for the embodiment shown in figure 1b). The notification message can include not only delay and jitter measurement(s), i.e. the communication service quality information, but also a QoS indication information (e.g., QoS indication can be QCI as in LTE, which may be used also in case of LTE-5G tight interworking, and/or 5QI as described in 5G system), Session ID and/or Flow ID information. When the AS 107 sends the notification message to 5GC 105 via the interface provided in embodiments of the invention (e.g., user plane interface or control plane interface or management plane interface), 5GC 105 may perform different operations such as User Plane Function (UPF) and/or RAN re-selection (e.g., distributed unit (DU) change, cell re-selection, handover to another cell, and beam re-selection). Furthermore, 5GC 105 may communicate this information to currently used UPF function(s) 204 and the UPF(s) 204 may check their internal schedules for this specific session/flow and may also change the internally assigned QoS indication information (e.g., QoS indication can be QCI as in LTE, which may be used also in case of LTE-5G tight interworking, and/or 5QI as described in 5G system) for the flow. Furthermore, RAN 103 and 5GC 105 can additionally generate a response message and report back to the AS 107 about what kind of actions are to be taken for the session/flow. The final response message can also be sent to the UE 101 by the application server (AS) 107 or the application function (AF) 105a.

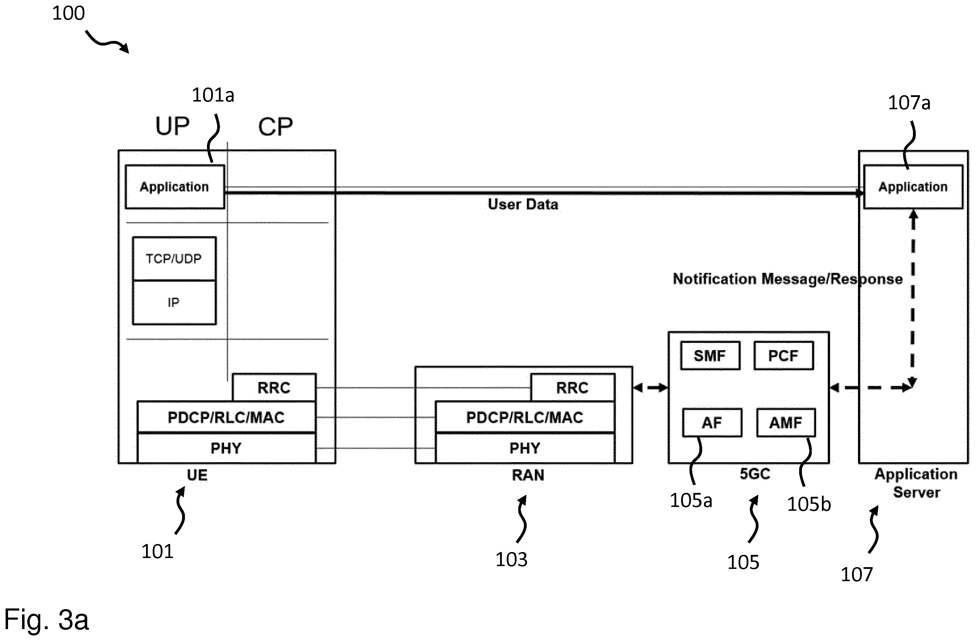

Figure 3a shows the uplink traffic scenario, which is not according to the claims, and in which the AS 107 performs end-to-end delay and jitter measurement when it receives the uplink packet, i.e., the application layer message in the uplink direction. If the packet passes the end-to-end delay and jitter evaluation (i.e., the packet is received within the required delay and jitter threshold), it is delivered for further processing. Meanwhile, the AS 107 generates a notification message which informs the 5GC 105 and RAN 103 about the measurement result, i.e. the communication service quality information, over the interface. Similarly, if the measurement result exceeds a certain threshold, this may even create a violation report with a cause which could be a delay or jitter violation. Furthermore, a notification message can also be sent to the UE 101 by the AS 107 or the AF 105a as a feedback information of its uplink transmission.

Thus, according to an embodiment, the AS 107 or the AF 105a is configured to transmit a notification message including the communication service quality information to the network management and/or control entity 105b, 109a implemented in the core network 105 and/or management plane 109 of the communication network 100. Moreover, according to an embodiment, the AS 107 or the AF 105a is configured to extract timing information, in particular one or more timestamps, from an application layer uplink message received from the user equipment 101 as part of the communication service and to determine the communication service quality information on the basis of the timing information.

According to a further embodiment, the AS 107 or the AF 105a is configured to receive the timing information, e.g. the one or more timestamps from the UE 101 and to determine the communication service quality information on the basis of the timing information. In this case the timing information has been extracted by the UE 101 from an application layer message received from the AS 107 or the AF 105a as part of the communication service. In a further embodiment, the AS 107 or the AF 105a is configured to receive the communication service quality information directly from the UE 101. In this case, the UE 101 has extracted the timing information, e.g. the one or more timestamps from an application layer message received from the AS 107 or the AF 105a as part of the communication service and determines the communication service quality information on the basis of the extracted timing information.

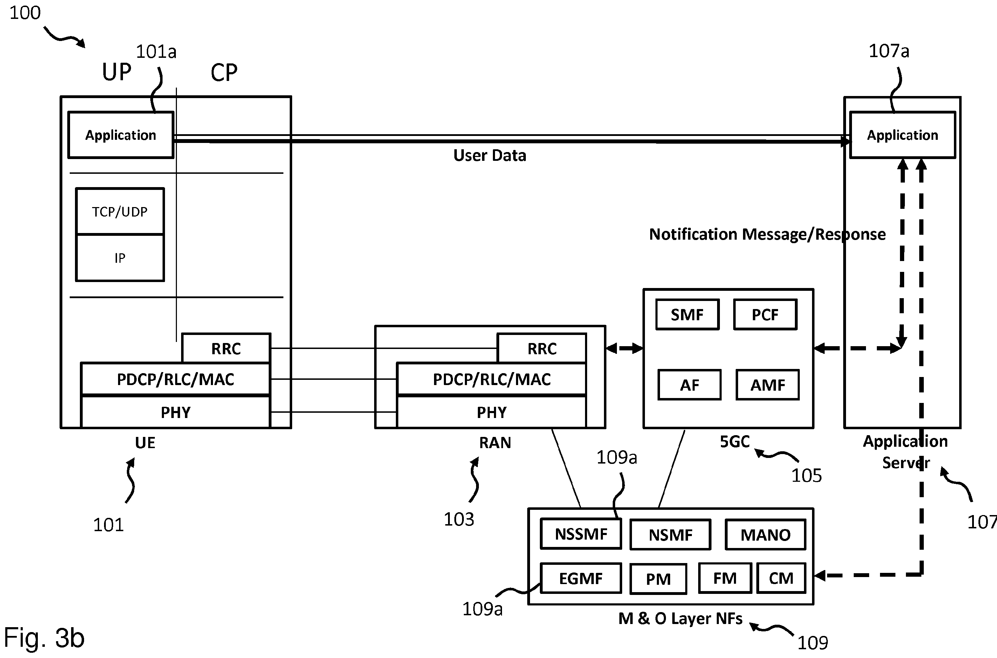

An embodiment similar to the embodiment shown in figure 3a is illustrated in figure 3b, where the network management and/or control entity 109a is implemented as a network function 109a in the management plane 109 of the communication network 100, wherein the embodiments of figures 3a and 3b are not according to the claims.

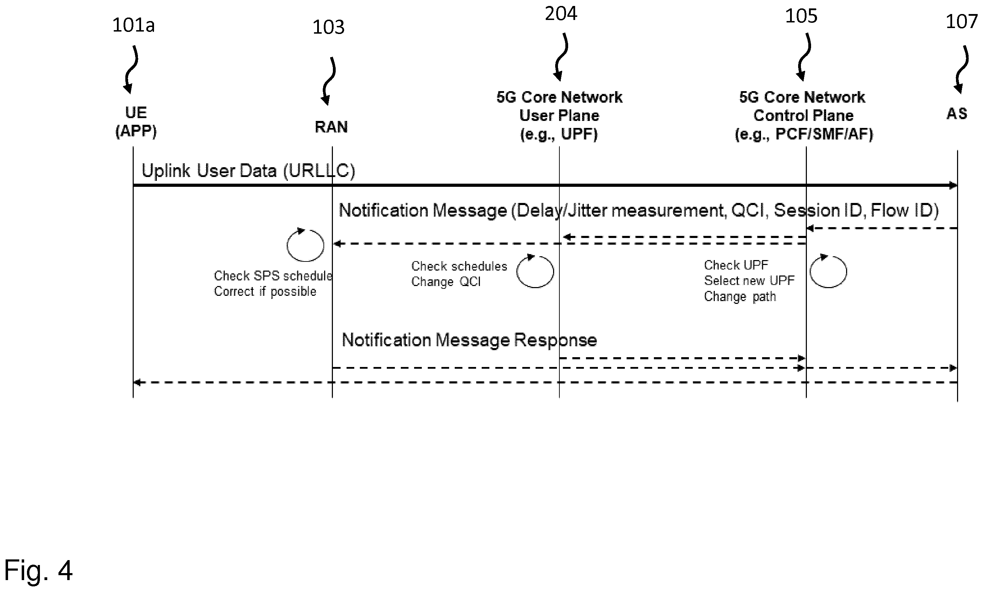

Figure 4 shows possible notification signaling for the embodiment shown in figure 3a for uplink traffic (a similar notification signaling can be implemented for the embodiment shown in figure 3b), wherein Fig. 4 is not according to the claims. The notification message can include not only delay and jitter measurement(s), i.e. the communication service quality information, but also a QoS indication information (e.g., QoS indication can be QCI as in LTE, which may be used also in case of LTE-5G tight interworking, and/or 5QI as described in 5G system), Session ID and/or Flow ID information. When the AS 107 sends the notification message to 5GC 105 via the interface provided in embodiments of the invention (e.g., user plane interface or control plane interface or management plane interface), 5GC 105 may perform different operations such as User Plane Function (UPF) and/or RAN re-selection (e.g., distributed unit (DU) change, cell re-selection, handover to another cell, and beam re-selection). Furthermore, 5GC 105 may communicate this information to the currently used UPF function(s) 204 and the UPF(s) 204 may check their internal schedules for this specific session/flow and may also change the internally assigned QoS indication information for the flow. Furthermore, RAN 103 and 5GC 105 can additionally generate a response message and report back to the AS 107 about what kind of actions are to be taken for the session/flow. The final response message can also be sent to the UE 101 by the application server (AS) 107 or the application function (AF) 105a.

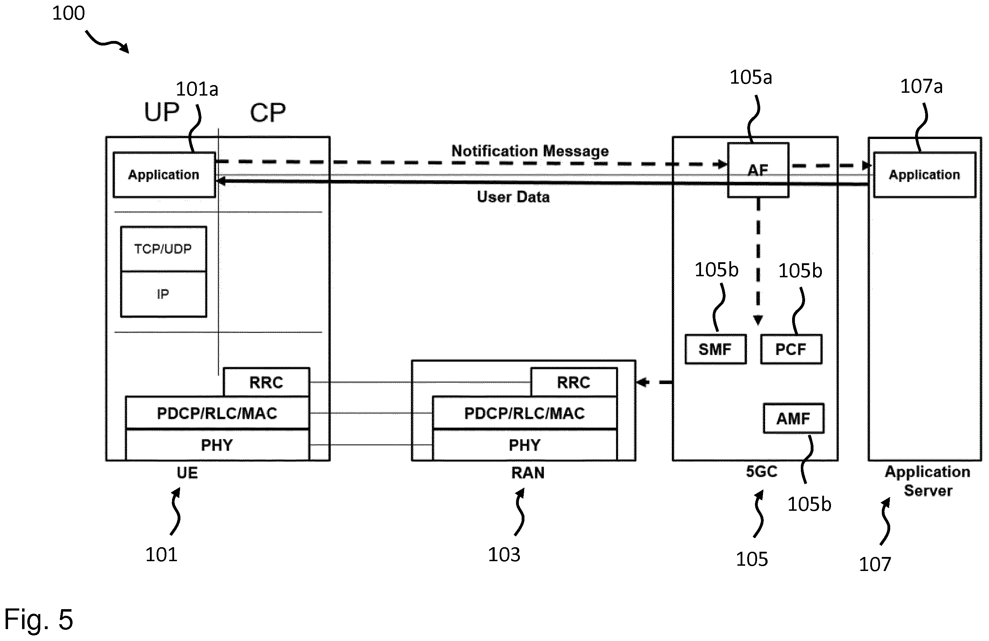

Figure 5 shows the notification message flow for the embodiment shown in figure 3a for downlink traffic (a similar notification signaling can be implemented for the embodiment shown in figure 3b). In this case, the UE application 101a can perform end-to-end delay and jitter measurement(s) when it receives the packet (either directly received from AS 107 or via the application function (AF) 105a located in 5GC 105). Similar to the previously described embodiments, the UE application 101a can perform end-to-end delay and jitter measurement(s), when it receives the packet. If the packet passes the end-to-end delay and jitter evaluation (i.e., the packet is received within the required delay and jitter threshold), it is delivered for further processing. Meanwhile, the UE application 101a generates a notification message which informs the application server (AS) 107a via the application function (AF) 105a about the measurement result, i.e. the communication service quality information, which may include a violation report with a cause. This cause could be a delay or jitter violation. Once the AF 105a receives the notification message, it directly passes this information to other 5G core network (5GC) 105 entities 105b and the radio access network (RAN) 103 over the interface provided in embodiments of the invention.

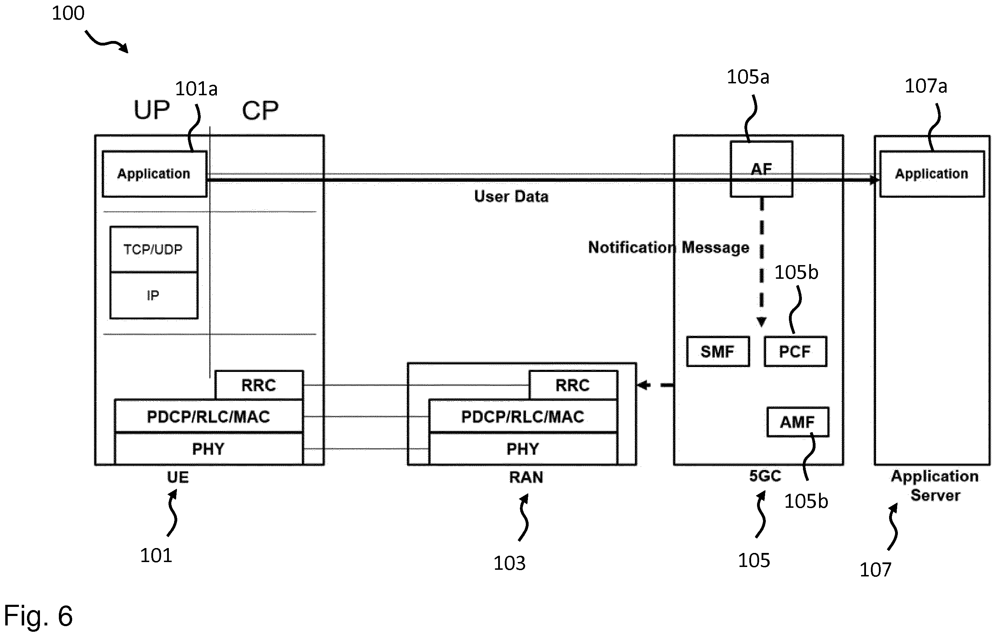

Figure 6 shows the corresponding uplink traffic scenario, which is not according to the claims, and where the AF 105a performs the end-to-end delay and jitter measurement when it receives the uplink packet and relays the traffic to the AS 107. For further details reference is made to the description of figure 5 above.

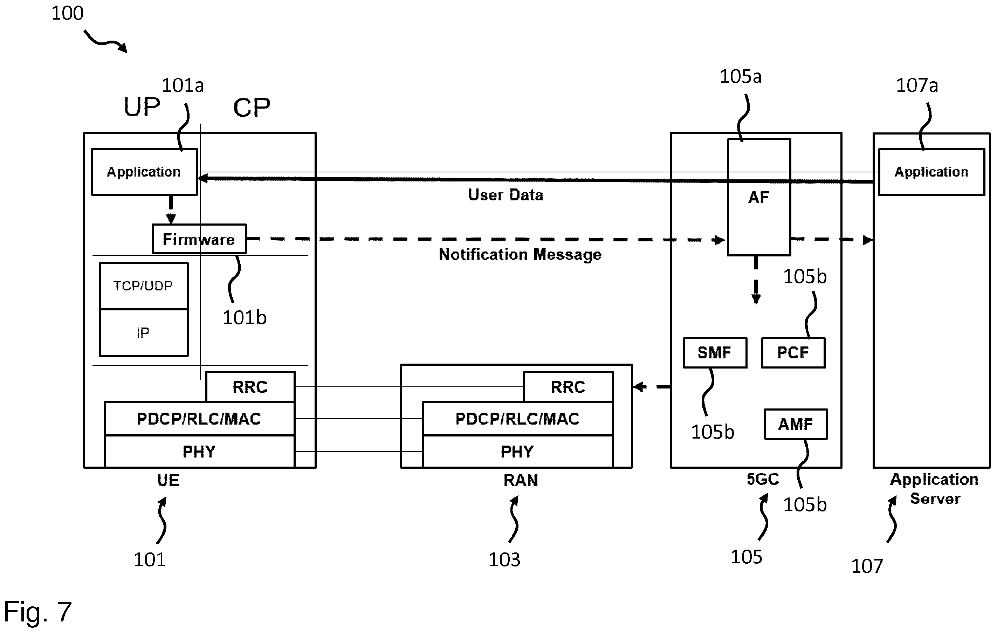

Figure 7 shows the notification message flow according to further embodiments of the invention. In this case, a firmware 101b can be implemented in the UE 101 which provides the notification messages to the AF 105a. Once the AF 105a receives the notification message from the UE firmware 101b, it directly passes this information to other 5G core network (5GC) 105 entities 105b and the radio access network (RAN) 103 over the interface as provided by embodiments of the invention.

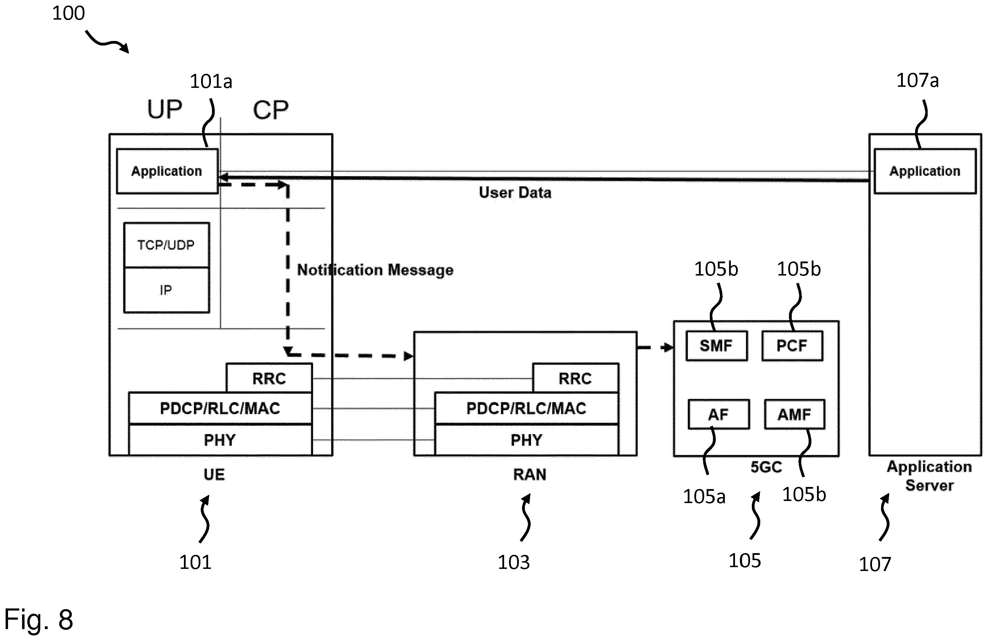

Figure 8 shows the notification message flow for the second option mentioned above, i.e., CN 105 and RAN 103 notification including, e.g., RRC layer and/or NAS layer interaction. In this case, when the UE application 101a generates the notification message, the message is transmitted to RRC and/or NAS layers in the UE 101 (i.e., the UE modem, as illustrated by the protocol stack shown in figure 8), the UE modem passes the message to the RAN 103 (e.g., via RRC layer) or to the CN 105 (e.g., via Non-Access Stratum (NAS) layer). The RAN 103 may also pass the notification message to the CN 105 over a standardized interface. Such a mechanism can be also used for uplink traffic in a way that the network 100 (i.e. RAN 103 or 5GC 105) can generate notification messages and deliver them to the UE 101 via RRC and NAS signaling.

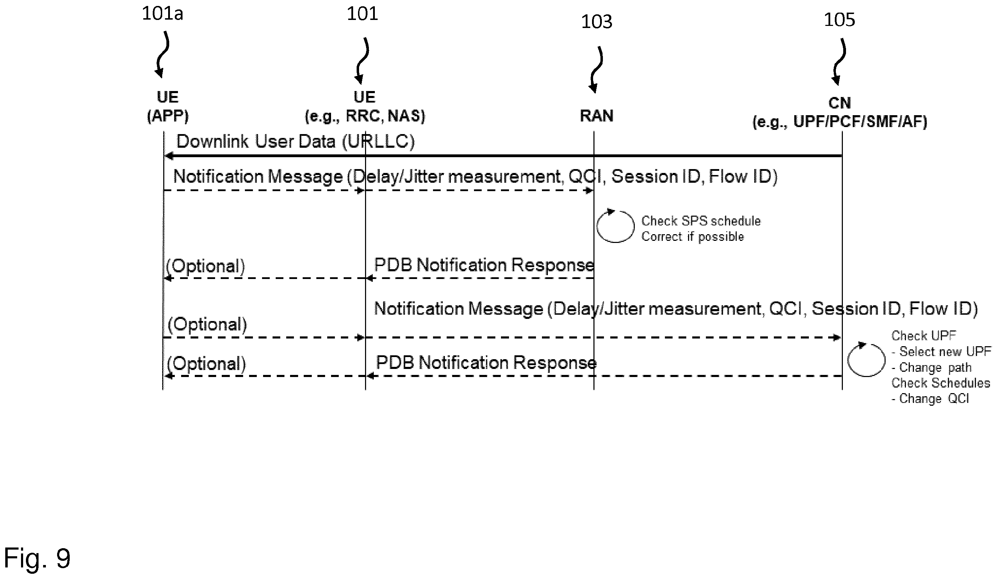

Figure 9 shows a possible notification message signaling for the embodiment shown in Figure 8 considering interactions of UE with RAN and CN to provide notification information. In this case, the UE 101 can communicate with the RAN 103, e.g., over RRC messages, and the CN 105, e.g., over NAS messages, separately while providing notification information.

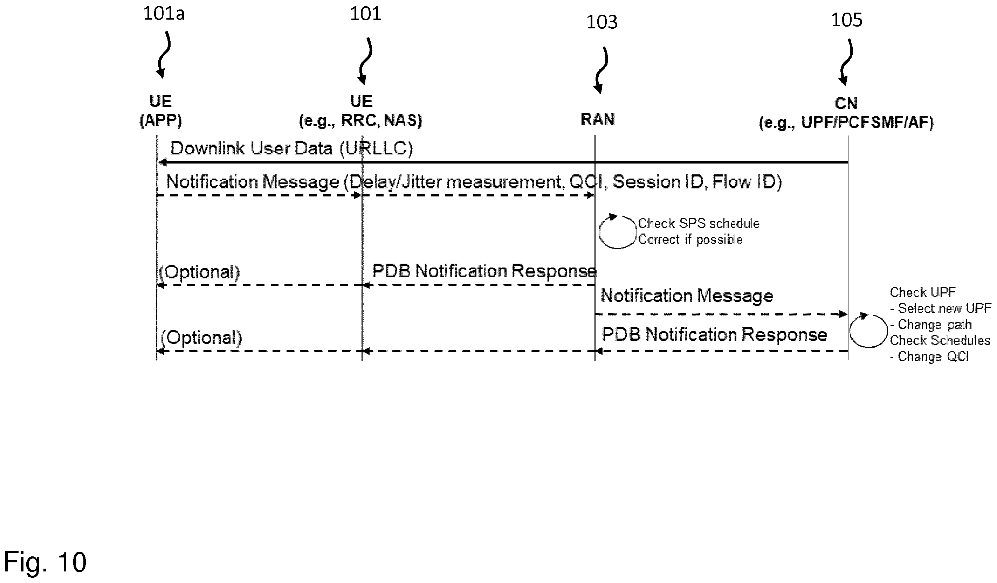

Figure 10 illustrates another possible notification message signaling for the embodiment shown in Figure 8, wherein, when the RAN 103 receives the notification message from the UE 101, it performs a local check of the session (e.g., SPS schedule checking) and also relays the notification message directly to the CN 105.

Further embodiments of the invention make use of multipath transmission scenarios in the communication network 100. In these multipath transmission scenarios URLLC data can be transmitted over two different communication paths (this could be also two different mobile network operator (PLMN)). Thus, according to an embodiment relating to such a multipath transmission scenario, the UE 101 can send different notification messages for each transmission path to the AS 107 or AF 105a or RAN 103. In case, both paths belong to the same session (i.e., multi-home session), then an extra identifier can be provided in addition to the session ID (e.g. path ID, UPF ID, PLMN ID).

Thus, in an embodiment, the user equipment 101 is configured to transmit at least two notification messages including the communication service quality measure information to the network application entity 107, 105a of the communication network 100 via different communication paths.

According to a further embodiment, the user equipment 101 is configured to extract further timing information, in particular a further timestamp, from a further application layer downlink message received from the network application entity 107, 105a via a further communication path and to determine the communication service quality information on the basis of the timing information and the further timing information.

Likewise, according to a further embodiment, the network application entity 107, 105a is configured to extract further timing information, in particular a further timestamp, from a further application layer uplink message received from the user equipment 101 via a further communication path and to determine the communication service quality information on the basis of the timing information and the further timing information.

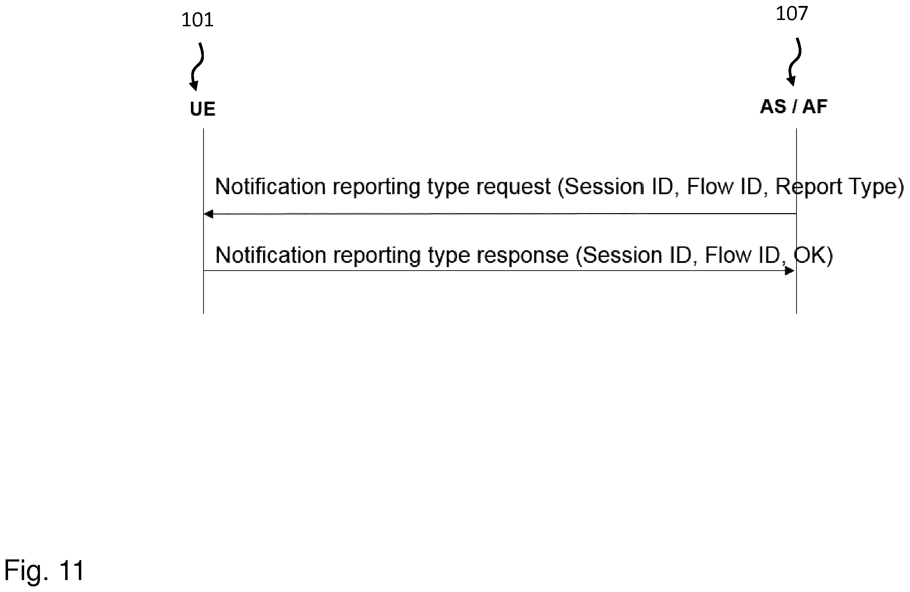

According to embodiments of the invention, the application server 107 or application function 105a may configure the UE 101 about a certain notification type as illustrated in figure 11. This notification type configuration may consider an event/threshold based reporting (e.g., delay/jitter above a certain threshold) and/or a periodic or aperiodic reporting. According to embodiments the reporting may comprise: an average measured delay/jitter within a certain time period (e.g., 1 sec); a maximum measured delay/jitter within a certain time period (e.g., 1 sec); and/or a delay/jitter measurement time series per time period (e.g., 1 sec).

According to further embodiments of the invention, as already described above, a management and orchestration layer (M&O) can be considered. The Core Network (CN) 105 controls the short-term actions, such as UE-associated session management, while the M&O handles long-term actions. Accordingly, the notification message content can also be utilized to collect long-term statistics. That is, the notification message content can be used, e.g., for short-term actions by the network layer (i.e., CN, transport network (TN), or RAN) or can be used for long-term actions by the M&O layer 109. For example, if the delay requirements cannot be met for a time period, the M&O layer 109 may initiate a re-orchestration of the network functions (NFs) 109a. The re-orchestration may imply, e.g., instantiating a user plane function (UPF) closer to the RAN 103 such as at the edge cloud or radio cloud, instead of at the central cloud. An M&O layer decision can be providing different requirements to the transport network (TN), e.g., in terms of delay budget. Another M&O decision could be slice re-configuration such that different delay budgets are distributed to the domains of the network layer (such as CN, TN, RAN). The access network (AN) can comprise 3GPP-based RAN or non-3GPP based AN, such as Wi-Fi network or private LAN.

As already described above in the context of figure 1b, the M&O layer 109 can contain 3GPP-defined functions, e.g., communication service management function (CSMF), network slice management function (NSMF), network slice subnet management function (NSSMF), management data analytics function (MDAF), as well as the ETSI Network Function Virtualization (NFV) defined functions needed for network function (NF) orchestration. Open-source functions can also be part of the M&O layer, such as open network automation platform (ONAP). The notification message content can thus be utilized by the data analytics functions (e.g., Network Data Analytics Function (NWDAF) in the CN and MDAF in the M&O) from which the analytics could be used by control functions in the network layer (e.g., SMF) and management functions in the M&O layer 109 (e.g., performance management, PM). Also, the analytics can be shared among such functions. For example, the notification message content can be utilized to generate analytics by the NWDAF which may be shared with the MDAF in the M&O layer 109. Accordingly, the decision on the control or management can be taken jointy by CN 105 and M&O 109. The analytics generated by such analytics functions can also be used in the new slice set-up. The analytics may be generated by, e.g., machine learning (ML) or artificial intelligence (AI) designs.

The notification message content may be also directly shared with the M&O 109 via, e.g., Application APIs through network exposure function or monitoring in the application (e.g., tenant, customer, or enterprise) or in the life-cycle management (LCM) function in the application. The level of actions considering the analytics or notification message content can be also mid-term, such as re-configuration of the semi-persistent scheduling (SPS) configuration.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. The scope of the invention is defined by the appended claims.

## Claims

1. A method for providing a communication service in a communication network (100), comprising:
sending, by a network application entity (107, 105a), an application layer downlink message to a user equipment (101); and
providing, by the network application entity (107, 105a), communication service quality information, in particular a communication service quality measure value, to a network management and/or control entity (105b; 109a) of the communication network (100); wherein the communication service quality information is determined based on timing information; and
wherein the method further comprises:
receiving, by the network application entity (107; 105a), the communication service quality information from the user equipment (101) of the communication network (100), wherein the communication service quality information comprises an end-to-end delay and/or a jitter evaluated by the user equipment based on the application layer downlink message; or
receiving, by the network application entity (107; 105a), the timing information from the user equipment (101) of the communication network (100), wherein the timing information is a timestamp showing an execution time of the application layer downlink message at the user equipment or an offset value showing the execution time of the application layer downlink message at the user equipment, and determining, by the network application entity (107; 105a), the communication service quality information on the basis of the timing information.

2. The method of any one of the preceding claims, wherein the communication service quality information comprises a communication service quality measure value and the providing the communication service quality information to the network management and/or control entity (105b; 109a) comprises: providing the communication service quality information to the network management and/or control entity (105b; 109a), in case the communication service quality measure value is larger or equal or smaller than a threshold value, wherein the threshold value is configured in advance by the network application entity (107; 105a).

3. The method of any one of the preceding claims, wherein the communication service quality information comprises an end-to-end delay and/or a jitter of the communication service and/or the method further comprises: providing, by the network application entity (107, 105a), a quality of service, QoS, class identifier, a session identifier and/or a flow identifier associated with the communications service quality information to the network management and/or control entity (105b; 109a).

4. The method of any one of the preceding claims, further comprising:
receiving, by the network management and/or control entity (105b; 109a), the communication service quality information from the network application entity (107; 105a) of the communication network (100); and
adjusting, by the network management and/or control entity (105b; 109a), the communication network (100) for improving the QoS of the communication service on the basis of the communication service quality information.

5. The method of claim 4, wherein the adjusting the communication network (100) comprises:
adjusting the communication network (100) by one or more of the following operations: re-selecting a user plane function and/or radio access network for an on-going communication session; selecting a new user plane function and/or new radio access network for a new communication session; re-orchestrating one or more network functions; and/or re-configurating a semi-persistent scheduling configuration in the radio access network of the communication network (100).

6. A method for using a communication service provided by a network application entity (107; 105a) in a communication network (100), wherein the method comprises:
receiving, by a user equipment (101), an application layer downlink message from the network application entity (107; 105a); and
providing, by the user equipment (101), communication service quality information, in particular a communication service quality measure value, to the network application entity (107; 105a) and/or to a network management and/or control entity (105b; 109a) of the communication network (100); wherein the communication service quality information is determined based on timing information extracted by the user equipment from the application layer downlink message, wherein the timing information is a timestamp showing an execution time of the application layer downlink message at the user equipment .

7. The method of claim 6, further comprising:
extracting, by the user equipment (101), further timing information from a further application layer message received from the network application entity (107; 105a) via a further communication path of the communication network (100);
and wherein, the determining the communication service quality information comprises:
determining the communication service quality information on the basis of the timing information and the further timing information.

8. The method of any one of claims 6 or 7, wherein the communication service quality information comprises a communication service quality measure value and wherein the providing the communication service quality information to the network application entity (107; 105a) and/or to the network management and/or control entity (105b; 109a) comprises: providing the communication service quality information to the network application entity (107; 105a) and/or to the network management and/or control entity (105b; 109a), in case the communication service quality measure value is larger, or equal or smaller than a threshold value, wherein the threshold value is configured in advance by the network application entity (107; 105a).

9. The method of any one of claims 6 to 8, wherein the user equipment provides the communication service quality information to the network management and/or control entity (105b; 109a) of the communication network (100), and wherein the method further comprises:
receiving, by the network management and/or control entity (105b; 109a), the communication service quality information from the user equipment (101); and
adjusting, by the network management and/or control entity (105b; 109a), the communication network (100) for improving the QoS of the communication service on the basis of the communication service quality information.

10. The method of claim 9, wherein the adjusting the communication network (100) comprises:
adjusting the communication network (100) by one or more of the following operations: re-selecting a user plane function and/or radio access network for an on-going communication session; selecting a new user plane function and/or new radio access network for a new communication session; re-orchestrating one or more network functions; and/or re-configurating a semi-persistent scheduling configuration in the radio access network of the communication network (100).

11. A network application entity (107, 105a) configured to perform the method of any one of the claims 1 to 3.

12. A user equipment (101) configured to perform the method of any one of the claims 6 to 8.

## Patentansprüche

1. Verfahren zum Bereitstellen eines Kommunikationsdienstes in einem Kommunikationsnetzwerk (100), umfassend:
Senden, durch eine Netzwerkanwendungseinheit (107, 105a), einer Anwendungsschicht-Downlink-Nachricht an ein Benutzergerät (101); und
Bereitstellen, durch die Netzwerkanwendungseinheit (107, 105a), von Kommunikationsdienstgüteinformationen, insbesondere eines Kommunikationsdienstgütemesswerts, für eine Netzwerkverwaltungs- und/oder -steuerungseinheit (105b; 109a) des Kommunikationsnetzwerks (100); wobei die Kommunikationsdienstgüteinformationen auf der Grundlage von Zeitinformationen bestimmt werden; und
wobei das Verfahren ferner Folgendes umfasst:
Empfangen, durch die Netzwerkanwendungseinheit (107; 105a), der Kommunikationsdienstgüteinformationen von dem Benutzergerät (101) des Kommunikationsnetzwerks (100), wobei die Kommunikationsdienstgüteinformationen eine Ende-zu-Ende-Verzögerung und/oder einen Jitter umfassen, der durch das Benutzergerät basierend auf der Anwendungsschicht-Downlink-Nachricht ausgewertet wird; oder
Empfangen, durch die Netzwerkanwendungseinheit (107; 105a), der Zeitinformationen von dem Benutzergerät (101) des Kommunikationsnetzwerks (100), wobei die Zeitinformationen ein Zeitstempel sind, der eine Ausführungszeit der Anwendungsschicht-Downlink-Nachricht an dem Benutzergerät anzeigt, oder ein Offset-Wert, der die Ausführungszeit der Anwendungsschicht-Downlink-Nachricht an dem Benutzergerät anzeigt, und Bestimmen, durch die Netzwerkanwendungseinheit (107; 105a), der Kommunikationsdienstgüteinformationen auf der Grundlage der Zeitinformationen.

2. Verfahren nach einem der vorhergehenden Ansprüche, wobei die Kommunikationsdienstgüteinformationen einen Kommunikationsdienstgütemesswert umfassen und das Bereitstellen der Kommunikationsdienstgüteinformationen für die Netzwerkverwaltungs- und/oder -steuerungseinheit (105b; 109a) Folgendes umfasst: Bereitstellen der Kommunikationsdienstgüteinformationen für die Netzwerkverwaltungs- und/oder -steuerungseinheit (105b; 109a), falls der Kommunikationsdienstgütemesswert größer oder gleich oder kleiner als ein Schwellenwert ist, wobei der Schwellenwert im Voraus durch die Netzwerkanwendungseinheit (107; 105a) konfiguriert wird.

3. Verfahren nach einem der vorhergehenden Ansprüche, wobei die Kommunikationsdienstgüteinformationen eine Ende-zu-Ende-Verzögerung und/oder einen Jitter des Kommunikationsdienstes umfassen und/oder das Verfahren ferner Folgendes umfasst: Bereitstellen, durch die Netzwerkanwendungseinheit (107, 105a), einer Dienstgüteklassenkennung, QoS-Klassenkennung, einer Sitzungskennung und/oder einer Flusskennung, die mit den Kommunikationsdienstgüteinformationen verknüpft ist, für die Netzwerkverwaltungs- und/oder -steuerungseinheit (105b; 109a).

4. Verfahren nach einem der vorhergehenden Ansprüche, ferner umfassend:
Empfangen, durch die Netzwerkverwaltungs- und/oder - steuerungseinheit (105b; 109a), der Kommunikationsdienstgüteinformationen von der Netzwerkanwendungseinheit (107; 105a) des Kommunikationsnetzwerks (100); und
Anpassen, durch die Netzwerkverwaltungs- und/oder - steuerungseinheit (105b; 109a), des Kommunikationsnetzwerks (100) zum Verbessern der QoS des Kommunikationsdienstes auf der Grundlage der Kommunikationsdienstgüteinformationen.

5. Verfahren nach Anspruch 4, wobei das Anpassen des Kommunikationsnetzwerks (100) Folgendes umfasst: Anpassen des Kommunikationsnetzwerks (100) durch einen oder mehrere der folgenden Vorgänge: erneutes Auswählen einer Benutzerebenenfunktion und/oder eines Funkzugangsnetzwerks für eine laufende Kommunikationssitzung; Auswählen einer neuen Benutzerebenenfunktion und/oder eines neuen Funkzugangsnetzwerks für eine neue Kommunikationssitzung; erneutes Orchestrieren einer oder mehrerer Netzwerkfunktionen; und/oder erneutes Konfigurieren einer semipersistenten Planungskonfiguration in dem Funkzugangsnetzwerk des Kommunikationsnetzwerks (100).

6. Verfahren zum Verwenden eines Kommunikationsdienstes, der durch eine Netzwerkanwendungseinheit (107; 105a) in einem Kommunikationsnetzwerk (100) bereitgestellt wird, wobei das Verfahren Folgendes umfasst:
Empfangen, durch ein Benutzergerät (101), einer Anwendungsschicht-Downlink-Nachricht von der Netzwerkanwendungseinheit (107, 105a); und
Bereitstellen, durch das Benutzergerät (101), von Kommunikationsdienstgüteinformationen, insbesondere eines Kommunikationsdienstgütemesswerts, für die Netzwerkanwendungseinheit (107; 105a) und/oder für eine Netzwerkverwaltungs- und/oder -steuerungseinheit (105b; 109a) des Kommunikationsnetzwerks (100); wobei die Kommunikationsdienstgüteinformationen basierend auf Zeitinformationen bestimmt werden, die durch das Benutzergerät aus der Anwendungsschicht-Downlink-Nachricht extrahiert werden, wobei die Zeitinformationen ein Zeitstempel sind, der eine Ausführungszeit der Anwendungsschicht-Downlink-Nachricht an dem Benutzergerät anzeigt.

7. Verfahren nach Anspruch 6, ferner umfassend:
Extrahieren, durch das Benutzergerät (101), weiterer Zeitinformationen aus einer weiteren Anwendungsschichtnachricht, die von der Netzwerkanwendungseinheit (107; 105a) über einen weiteren Kommunikationspfad des Kommunikationsnetzwerks (100) empfangen wird;
und wobei das Bestimmen der Kommunikationsdienstgüteinformationen Folgendes umfasst:
Bestimmen der Kommunikationsdienstgüteinformationen auf der Grundlage der Zeitinformationen und der weiteren Zeitinformationen.

8. Verfahren nach einem der Ansprüche 6 oder 7, wobei die Kommunikationsdienstgüteinformationen einen Kommunikationsdienstgütemesswert umfassen und wobei das Bereitstellen der Kommunikationsdienstgüteinformationen für die Netzwerkanwendungseinheit (107; 105a) und/oder für die Netzwerkverwaltungs- und/oder -steuerungseinheit (105b; 109a) Folgendes umfasst: Bereitstellen der Kommunikationsdienstgüteinformationen für die Netzwerkanwendungseinheit (107; 105a) und/oder für die Netzwerkverwaltungs- und/oder -steuerungseinheit (105b; 109a), falls der Kommunikationsdienstgütemesswert größer oder gleich oder kleiner als ein Schwellenwert ist, wobei der Schwellenwert im Voraus durch die Netzwerkanwendungseinheit (107; 105a) konfiguriert wird.

9. Verfahren nach einem der Ansprüche 6 bis 8, wobei das Benutzergerät die Kommunikationsdienstgüteinformationen für die Netzwerkverwaltungs- und/oder -steuerungseinheit (105b; 109a) des Kommunikationsnetzwerks (100) bereitstellt und wobei das Verfahren ferner Folgendes umfasst:
Empfangen, durch die Netzwerkverwaltungs- und/oder - steuerungseinheit (105b; 109a), der Kommunikationsdienstgüteinformationen von dem Benutzergerät (101); und
Anpassen, durch die Netzwerkverwaltungs- und/oder - steuerungseinheit (105b; 109a), des Kommunikationsnetzwerks (100) zum Verbessern der QoS des Kommunikationsdienstes auf der Grundlage der Kommunikationsdienstgüteinformationen.

10. Verfahren nach Anspruch 9, wobei das Anpassen des Kommunikationsnetzwerks (100) Folgendes umfasst: Anpassen des Kommunikationsnetzwerks (100) durch einen oder mehrere der folgenden Vorgänge: erneutes Auswählen einer Benutzerebenenfunktion und/oder eines Funkzugangsnetzwerks für eine laufende Kommunikationssitzung; Auswählen einer neuen Benutzerebenenfunktion und/oder eines neuen Funkzugangsnetzwerks für eine neue Kommunikationssitzung; erneutes Orchestrieren einer oder mehrerer Netzwerkfunktionen; und/oder erneutes Konfigurieren einer semipersistenten Planungskonfiguration in dem Funkzugangsnetzwerk des Kommunikationsnetzwerks (100).

11. Netzwerkanwendungseinheit (107, 105a), die dazu konfiguriert ist, das Verfahren nach einem der Ansprüche 1 bis 3 durchzuführen.

12. Benutzergerät (101), das dazu konfiguriert ist, das Verfahren nach einem der Ansprüche 6 bis 8 durchzuführen.

## Revendications

1. Procédé de fourniture d'un service de communication dans un réseau de communication (100), comprenant :
l'envoi, par une entité d'application de réseau (107, 105a), d'un message de liaison descendante de couche d'application à un équipement utilisateur (101) ; et
la fourniture, par l'entité d'application de réseau (107, 105a), d'informations de qualité de service de communication, en particulier une valeur de mesure de qualité de service de communication, à une entité de gestion et/ou de commande de réseau (105b ; 109a) du réseau de communication (100) ; dans lequel les informations de qualité de service de communication sont déterminées sur la base d'informations de synchronisation ; et
dans lequel le procédé comprend également :
la réception, par l'entité d'application de réseau (107 ; 105a), des informations de qualité de service de communication provenant de l'équipement utilisateur (101) du réseau de communication (100), dans lequel les informations de qualité de service de communication comprennent un retard de bout en bout et/ou une gigue évaluée par l'équipement utilisateur sur la base du message de liaison descendante de couche d'application ; ou
la réception, par l'entité d'application de réseau (107 ; 105a), des informations de synchronisation provenant de l'équipement utilisateur (101) du réseau de communication (100), dans lequel les informations de synchronisation sont un horodatage indiquant un temps d'exécution du message de liaison descendante de couche d'application au niveau de l'équipement utilisateur ou une valeur de décalage indiquant le temps d'exécution du message de liaison descendante de couche d'application au niveau de l'équipement utilisateur, et la détermination, par l'entité d'application de réseau (107 ; 105a), des informations de qualité de service de communication sur la base des informations de synchronisation.

2. Procédé selon l'une quelconque des revendications précédentes, dans lequel les informations de qualité de service de communication comprennent une valeur de mesure de qualité de service de communication et la fourniture des informations de qualité de service de communication à l'entité de gestion et/ou de commande de réseau (105b ; 109a) comprend : la fourniture des informations de qualité de service de communication à l'entité de gestion et/ou de commande de réseau (105b ; 109a), dans le cas où la valeur de mesure de qualité de service de communication est supérieure ou égale ou inférieure à une valeur seuil, dans lequel la valeur seuil est configurée à l'avance par l'entité d'application de réseau (107 ; 105a).

3. Procédé selon l'une quelconque des revendications précédentes, dans lequel les informations de qualité de service de communication comprennent un retard de bout en bout et/ou une gigue du service de communication et/ou le procédé comprend également : la fourniture, par l'entité d'application de réseau (107, 105a), d'un identifiant de classe de qualité de service, QoS, d'un identifiant de session et/ou d'un identifiant de flux associé aux informations de qualité de service de communication à l'entité de gestion et/ou de commande de réseau (105b ; 109a).

4. Procédé selon l'une quelconque des revendications précédentes, comprenant également :
la réception, par l'entité de gestion et/ou de commande de réseau (105b ; 109a), des informations de qualité de service de communication provenant de l'entité d'application de réseau (107 ; 105a) du réseau de communication (100) ; et
le réglage, par l'entité de gestion et/ou de commande de réseau (105b ; 109a), du réseau de communication (100) pour améliorer la qualité de service du service de communication sur la base des informations de qualité de service de communication.

5. Procédé selon la revendication 4, dans lequel le réglage du réseau de communication (100) comprend : le réglage du réseau de communication (100) par une ou plusieurs des opérations suivantes : la resélection d'une fonction de plan utilisateur et/ou d'un réseau d'accès radio pour une session de communication en cours ; la sélection d'une nouvelle fonction de plan utilisateur et/ou d'un nouveau réseau d'accès radio pour une nouvelle session de communication ; la réorchestration d'une ou de plusieurs fonctions de réseau ; et/ou la reconfiguration d'une configuration de planification semi-persistante dans le réseau d'accès radio du réseau de communication (100).

6. Procédé d'utilisation d'un service de communication fourni par une entité d'application de réseau (107 ; 105a) dans un réseau de communication (100), dans lequel le procédé comprend :
la réception, par un équipement utilisateur (101), d'un message de liaison descendante de couche d'application provenant de l'entité d'application de réseau (107 ; 105a) ; et
la fourniture, par l'équipement utilisateur (101), d'informations de qualité de service de communication, en particulier une valeur de mesure de qualité de service de communication, à l'entité d'application de réseau (107 ; 105a) et/ou à une entité de gestion et/ou de commande de réseau (105b ; 109a) du réseau de communication (100) ; dans lequel les informations de qualité de service de communication sont déterminées sur la base d'informations de synchronisation extraites par l'équipement utilisateur à partir du message de liaison descendante de couche d'application, dans lequel les informations de synchronisation sont un horodatage indiquant un temps d'exécution du message de liaison descendante de couche d'application au niveau de l'équipement utilisateur.

7. Procédé selon la revendication 6, comprenant également :
l'extraction, par l'équipement utilisateur (101), d'informations de synchronisation supplémentaires à partir d'un autre message de couche d'application reçu de l'entité d'application de réseau (107 ; 105a) via un autre chemin de communication du réseau de communication (100) ;
et dans lequel, la détermination des informations de qualité de service de communication comprend :
la détermination des informations de qualité de service de communication sur la base des informations de synchronisation et des informations de synchronisation supplémentaires.

8. Procédé selon l'une quelconque des revendications 6 ou 7, dans lequel les informations de qualité de service de communication comprennent une valeur de mesure de qualité de service de communication et dans lequel la fourniture des informations de qualité de service de communication à l'entité d'application de réseau (107 ; 105a) et/ou à l'entité de gestion et/ou de commande de réseau (105b ; 109a) comprend : la fourniture des informations de qualité de service de communication à l'entité d'application de réseau (107 ; 105a) et/ou à l'entité de gestion et/ou de commande de réseau (105b ; 109a), dans le cas où la valeur de mesure de qualité de service de communication est supérieure ou égale ou inférieure à une valeur seuil, dans lequel la valeur seuil est configurée à l'avance par l'entité d'application de réseau (107 ; 105a).

9. Procédé selon l'une quelconque des revendications 6 à 8, dans lequel l'équipement utilisateur fournit les informations de qualité de service de communication à l'entité de gestion et/ou de commande de réseau (105b ; 109a) du réseau de communication (100), et dans lequel le procédé comprend également :
la réception, par l'entité de gestion et/ou de commande de réseau (105b ; 109a), des informations de qualité de service de communication provenant de l'équipement utilisateur (101) ; et
le réglage, par l'entité de gestion et/ou de commande de réseau (105b ; 109a), du réseau de communication (100) pour améliorer la qualité de service du service de communication sur la base des informations de qualité de service de communication.

10. Procédé selon la revendication 9, dans lequel le réglage du réseau de communication (100) comprend : le réglage du réseau de communication (100) par une ou plusieurs des opérations suivantes : la resélection d'une fonction de plan utilisateur et/ou d'un réseau d'accès radio pour une session de communication en cours ; la sélection d'une nouvelle fonction de plan utilisateur et/ou d'un nouveau réseau d'accès radio pour une nouvelle session de communication ; la réorchestration d'une ou de plusieurs fonctions de réseau ; et/ou la reconfiguration d'une configuration de planification semi-persistante dans le réseau d'accès radio du réseau de communication (100).

11. Entité d'application réseau (107, 105a) configurée pour exécuter le procédé selon l'une quelconque des revendications 1 à 3.

12. Équipement utilisateur (101) configuré pour exécuter le procédé selon l'une quelconque des revendications 6 à 8.
